# FASCICULE DE BREVET EUROPEEN

(11) **EP 2 010 886 B1**
(45) Date de publication et mention de la délivrance du brevet: **28.09.2011**
(21) Numéro de dépôt: 07731291.6
(22) Date de dépôt: 13.04.2007
(51) Int. Cl.: G01N 1/12

(54) **DISPOSITIF DE PRELEVEMENT D'ECHANTILLONS SOUS PRESSION**
VORRICHTUNG ZUR ENTNAHME UNTER DRUCK STEHENDER PROBEN
DEVICE FOR TAKING PRESSURIZED SAMPLES

(30) Priorité: 26.04.2006 FR 0603739
(43) Date de publication de la demande: 07.01.2009
(73) Titulaire: Institut Français de Recherche pour l'Exploitation de la Mer (IFREMER), 92138 Issy-les-Moulineaux Cedex (FR)
(72) Inventeur: LANTERI, Nadine, 29280 Plouzane (FR); BIGNON, Laurent, 29280 Locmaria Plouzane (FR); DUPONT, Jacky, 29280 Plouzane (FR)
(74) Mandataire: Hays, Bertrand
(86) Numéro de dépôt international: PCT/FR2007/000624
(87) Numéro de publication internationale: WO 2007/128891

(56) Documents cités:
- DE-A1- 3 310 032
- GB-A- 2 278 830
- US-A- 3 266 323
- US-A- 3 892 130

## Description

La présente invention concerne un dispositif de prélèvement d'échantillons sous pression comprenant une enceinte de prélèvement, et un système d'ouverture de l'enceinte de prélèvement d'un tel dispositif pour la récupération d'échantillons sous pression. L'invention concerne plus particulièrement un dispositif de prélèvement d'échantillons sous-marins sous pression, de gaz, et/ou de liquides et/ou de solides tels que des hydrates de gaz.

Il est connu des dispositifs ou cellules de prélèvement d'échantillons de fluides sous marins sous pression permettant de conserver l'échantillon à sa pression d'origine de prélèvement pendant sa remontée en surface et son transport jusqu'au laboratoire. Ces dispositifs comprennent classiquement une enceinte de prélèvement associée à un mécanisme à piston ou un autre moyen tel qu'un moteur ou un ressort, assurant le transfert de l'échantillon dans l'enceinte de prélèvement. Il est connu des mécanismes à piston utilisant la pression hydrostatique. Le document US 3 892 130 décrit notamment une cellule de prélèvement, destinée en particulier au prélèvement de microorganismes, comprenant une enceinte supérieure de prélèvement et une enceinte inférieure basse pression, chacune équipée d'un piston, et communiquant entre elles par un passage à débit réglable. Avant utilisation, les pistons sont amenés en position haute et l'enceinte supérieure est remplie d'un liquide amortisseur et l'enceinte inférieure d'un gaz de précharge. Le gaz de précharge étant à une pression inférieure à la pression hydrostatique, à l'ouverture d'une valve d'un circuit d'admission, le fluide à prélever pénètre dans l'enceinte de prélèvement, le piston de cette dernière repousse le fluide amortisseur dans l'enceinte inférieure, entrainant un mouvement du piston de cette dernière vers le bas. L'aspiration de l'échantillon s'interrompt lorsque la pression du gaz de précharge atteint la pression de l'échantillon.

La préparation de la cellule précédant son utilisation, ainsi que la récupération de l'échantillon de la cellule, sont longues et fastidieuses. La configuration est liée à la pression d'utilisation. Par ailleurs, le prélèvement de l'échantillon est réalisé par aspiration via le circuit d'admission. Certains types d'échantillons peuvent être altérés par une aspiration rapide et/ou obturer le circuit d'admission et interrompre le prélèvement. C'est le cas notamment des hydrates de gaz : l'aspiration de fluides saturés en gaz, de méthane par exemple entraîne, sous certaines conditions de température et de pression la formation d'hydrates de gaz. De tels dispositifs de prélèvement s'avèrent inadaptés pour le prélèvement de tels échantillons. D'autres documents, tels DE 3310032 et US 3266323, décrivent des dispositifs de prélèvement de l'état de la technique. Le document GB 2278830, décrit un système d'ouverture d'une enceinte de prélèvement sous pression.

Le but de la présente invention est de proposer un dispositif de prélèvement palliant les inconvénients précités, permettant le prélèvement d'échantillons constitués de gaz, de liquides et/ou de solides sans imposer de mouvement à l'échantillon, en particulier sans aspiration et sans mélange du volume initial.

A cet effet, la présente invention a pour objet un dispositif de prélèvement d'échantillons sous pression, en particulier d'échantillons prélevés en milieu sous-marins, caractérisé en ce qu'il comporte
- une enceinte de prélèvement formée d'une chemise tubulaire et d'un axe muni à ses extrémités de bouchons cylindriques, apte à coulisser axialement dans ladite chemise de manière à former une chambre de prélèvement étanche entre la paroi tubulaire de la chemise et les deux bouchons dans une position fermée de l'enceinte de prélèvement, lesdits bouchons étant équipés de moyens assurant l'étanchéité entre la chemise et les bouchons dans la position fermée de l'enceinte de prélèvement, et
- un système de déplacement apte à réaliser une translation relative de l'axe de l'enceinte par rapport à ladite chemise pour amener l'enceinte en position fermée, ledit système comprenant un.vérin comportant un cylindre équipé à une première extrémité de moyens de mise en communication de l'intérieur du cylindre avec le milieu extérieur afin de déplacer le piston du vérin d'une position activée dans laquelle ledit piston est disposé du côté de ladite première extrémité, le cylindre étant rempli d'un fluide compressible basse pression, tel que de l'air à pression atmosphérique, vers une position désactivée dans laquelle le piston est disposé du côté de la deuxième extrémité du cylindre, le cylindre étant au moins partiellement rempli de fluide extérieur à pression hydrostatique,
   l'un des éléments de l'enceinte de prélèvement parmi la chemise et l'axe, étant apte à être assemblé par des moyens de liaison au cylindre du vérin, l'autre élément étant apte à être assemblé à l'extrémité libre de la tige du piston de sorte que, dans la position activée du piston au moins l'un des bouchons de l'axe n'est pas engagé dans la chemise, et que dans la position désactivée du piston, l'enceinte de prélèvement est en position fermée.

Selon l'invention, le dispositif de prélèvement comprend une enceinte de prélèvement et un système de déplacement séparé auxquels les éléments de l'enceinte peuvent être assemblés, comprenant un vérin qui utilise la pression hydrostatique pour amener l'enceinte en position fermée. Le dispositif selon l'invention permet un prélèvement d'échantillon sous pression, en milieu sous marin, nucléaire ou tout autre milieu hostile, sans imposer de mouvement à l'échantillon, en particulier sans aspiration, et sans mélange du volume initial, l'échantillon étant piégé dans la chemise, entre les deux bouchons, lors du déplacement relatif de l'axe par rapport à la chemise. Le dispositif selon l'invention est de conception simple, fiable, compact et robuste et peut être mis en oeuvre aisément, en toute sécurité. L'enceinte de prélèvement s'avère particulièrement simple de conception, peu encombrante et simple à manipuler après prélèvement pour la récupération de l'échantillon. Le dispositif ne nécessite pas de réglage en fonction de la profondeur d'utilisation. Le dispositif fonctionne à partir d'une profondeur minimale choisie au moment de la conception, principalement en fonction du diamètre du vérin. Au-dessus de cette profondeur minimale, la limite est liée à la résistance mécanique de la cellule et du vérin en particulier. Le caractère séparable du vérin et de l'enceinte permet d'utiliser un même vérin pour la prise de plusieurs échantillons successifs dans plusieurs enceintes. Par ailleurs, une même enceinte peut être utilisée avec des vérins différents, dimensionnés pour des prises d'échantillons à des profondeurs minimales différentes et/ou à des vitesses et/ou avec des efforts de fermeture différents.

Selon une particularité, lesdits moyens de mise en communication comprennent un pion escamotable, monté dans le cylindre et maintenu par des moyens de rappel élastique, tel qu'un simple ressort, dans une position de fermeture d'un circuit d'admission reliant l'intérieur du cylindre au milieu extérieur. Ledit pion est déplaçable sous l'effet d'une pression extérieure exercée sur ledit pion à l'encontre des moyens dé rappel, dans une position d'ouverture dudit circuit d'admission permettant l'admission d'eau de mer dans le cylindre. Le prélèvement de l'échantillon est réalisé par simple mise en communication du cylindre avec l'extérieur. L'actionnement du pion pour déclencher la fermeture de l'enceinte, peut être aisément effectué par un engin sous-marin commandé à distance. Le faible effort nécessaire pour actionner le pion est compatible avec une automatisation de la fermeture, par exemple au moyen d'un système de type électro-aimant.

Selon un mode de réalisation la fermeture de l'enceinte est réalisée par déplacement de la chemise par rapport à l'axe maintenu fixe, la tige de piston est apte à coulisser de manière étanche dans la deuxième extrémité du cylindre opposée à la première extrémité du cylindre qui porte les moyens de mise en communication avec le milieu extérieur), l'extrémité libre de ladite tige étant apte à être assemblée à une première extrémité de la chemise, l'axe étant apte à être assemblé par un premier bouchon au cylindre par lesdits moyens de liaison.

Avantageusement, la chemise comporte, à une première extrémité, deux oreilles longitudinales pour son assemblage au vérin, l'axe comprenant un premier bouchon muni d'un taraudage axial pour son assemblage au vérin. Avantageusement, le système de déplacement est apte à amener l'enceinte de prélèvement dans une position fermée dans laquelle le deuxième bouchon est partiellement engagé dans la chemise, la portion extérieure présentant une gorge annulaire destinée à la mise en place d'un joint torique pour l'ouverture ultérieure de l'enceinte au moyen d'un système d'ouverture approprié à la récupération de l'échantillon sous pression.

Selon un mode de réalisation, lesdits moyens de liaison comprennent une tige de liaison creuse assemblée à la deuxième extrémité du cylindre, dans laquelle coulisse la tige de piston, l'axe étant assemblé par son premier bouchon à l'extrémité libre filetée de la tige de liaison, la chemise étant assemblée par ses oreilles longitudinales à l'extrémité libre de la tige de piston au moyen d'une goupille apte à coulisser dans deux fentes longitudinales de la tige creuse lors du déplacement de la tige de piston, la fermeture de l'enceinte étant alors obtenue par déplacement vers le bas de la chemise lors du déplacement du piston d'une position haute activée vers une position basse désactivée.

Selon une particularité, le cylindre et le piston du vérin sont chacun équipés d'une soupape de décharge autorisant un passage de fluide de l'intérieur du cylindre vers l'extérieur sans déplacement du piston lorsque la pression dans le cylindre est supérieure de celle du milieu extérieur, permettant ainsi une manipulation en toute sécurité du vérin après la remontée en surface.

Selon une autre particularité, le dispositif comprend en outre un cône, de préférence transparent, apte à être assemblé de manière amovible sur la chemise de l'enceinte de prélèvement pour le piégeage de fluides de type hydrocarbures et/ou gaz plus légers que l'eau, le dispositif permettant alors de conserver en pression un volume d'échantillon intact et non mélangé résultant d'une collecte par ledit cône de suintements verticaux ascendants.

Selon une autre particularité, le dispositif comprend en outre une armature solidaire du cylindre entourant l'enceinte de prélèvement assemblée audit vérin pour protéger cette dernière des chocs, par laquelle le dispositif est apte à reposer sur le sol.

Avantageusement, l'enceinte de prélèvement comprend des moyens de verrouillage de l'enceinte en position ouverte, lesdits moyens de verrouillage comprenant par exemple une vis apte à être vissée dans un taraudage de la chemise et à s'engager dans une gorge annulaire du premier bouchon de l'axe.

La présente invention propose en outre un système d'ouverture de l'enceinte de prélèvement d'un dispositif de prélèvement tel que décrit précédemment, pour la récupération, en toute sécurité, d'un échantillon sous pression contenu dans ladite enceinte, caractérisé en ce qu'il comprend
- un bloc muni d'un logement cylindrique de réception, présentant un épaulement, et d'un canal de récupération débouchant dans ledit logement et destiné à être connecté à un circuit de récupération d'échantillon, et
- un support apte à être fixé au-dessus du logement de manière à bloquer l'enceinte de prélèvement dans le logement par sa chemise en butée par ses extrémités entre l'épaulement du logement et le support, ledit support portant une vis de poussée apte à coopérer avec l'axe pour le déplacer dans la partie inférieure du logement définie entre le fond du logement et son épaulement, afin d'ouvrir l'enceinte et récupérer l'échantillon par le canal de récupération.

Selon une particularité, l'épaulement du logement présente une première rainure radiale débouchant sur le canal de récupération, des moyens d'étanchéité étant prévus pour garantir l'étanchéité entre le bouchon placé dans le logement et la paroi de la partie inférieure du logement, de manière à diminuer les efforts repris par le système d'ouverture et à minimiser le volume mis en communication avec l'intérieur de l'enceinte et par conséquence la détente l'échantillon. Selon un mode de réalisation, ledit bouchon comprend un premier joint torique garantissant l'étanchéité entre la chemise et le bouchon et un deuxième joint torique assurant l'étanchéité entre le bouchon et la partie inférieure du logement, ce dernier étant de préférence disposé à l'extérieur de la chemise dans la position fermée de l'enceinte. Avantageusement, le bloc est équipé d'un capteur de pression débouchant sur une deuxième rainure radiale pour mesurer la pression de l'échantillon après ouverture de l'enceinte et avant ouverture du circuit de récupération.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés sur lesquels :
- la figure 1 est une vue en perspective d'un dispositif de prélèvement selon l'invention comprenant une enceinte de prélèvement et un vérin de fermeture de l'enceinte, avec le piston du vérin en position désactivée et l'enceinte en position fermée ;
- la figure 2 est une vue de dessus du dispositif de la figure 1 ;
- la figure 3 est une vue agrandie selon le plan de coupe III-III de la figure 2 ;
- la figure 4 est une vue analogue à la figure 3, le piston en position activée et l'enceinte en position ouverte ;
- la figure 5 est une vue agrandie selon le plan de coupe V-V de la figure 2 ;
- la figure 6 est une vue en perspective d'un banc de laboratoire comprenant un système d'ouverture de l'enceinte de prélèvement contenant un fluide sous pression ;
- la figure 7 est une vue de face du banc de laboratoire de la figure 6 ; et,
- les figures 8 et 9 sont des vues agrandies en coupe longitudinale du système d'ouverture, respectivement selon les plans VIII-VIII et IX-IX de la figure 7.

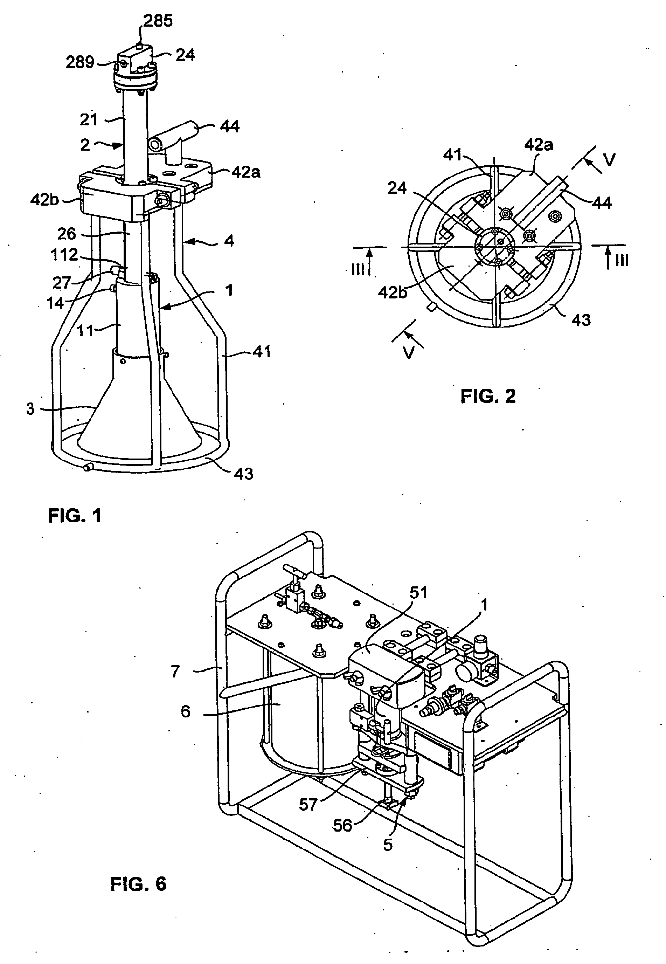

Le dispositif de prélèvement selon l'invention illustré aux figures 1 à 5, destiné en particulier au prélèvement d'échantillons sous marins, tel que des hydrates de gaz, comprend une enceinte de prélèvement 1 assemblée de manière amovible à un vérin 2 qui utilise la pression hydrostatique pour fermer l'enceinte de prélèvement et piéger l'échantillon.

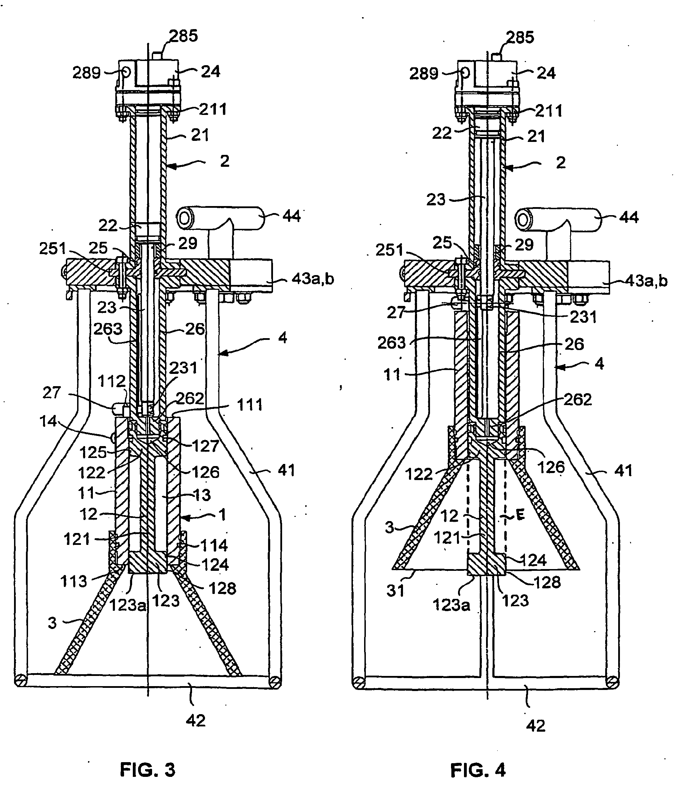

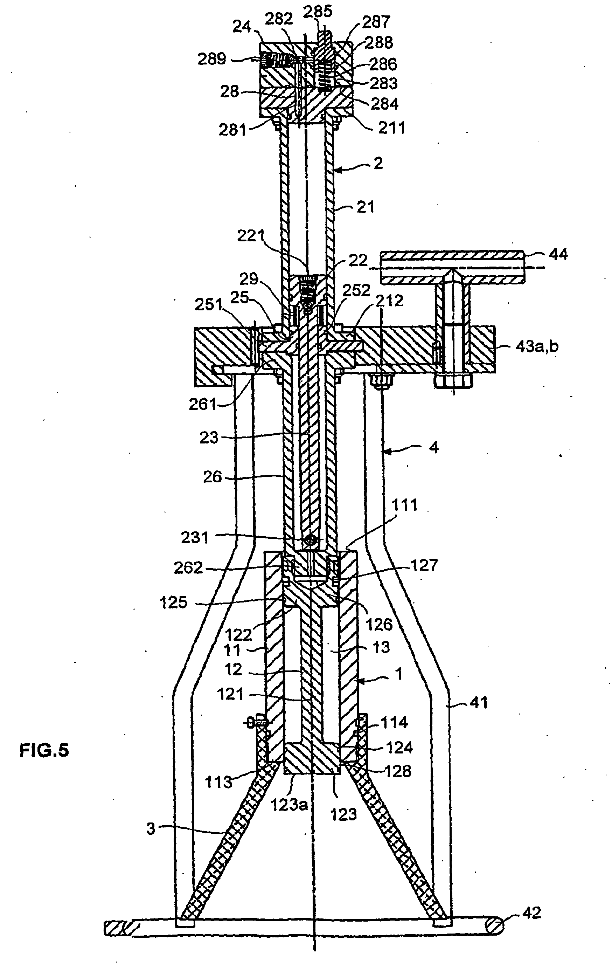

L'enceinte 1 est constituée d'une chemise 11, formée d'un tube cylindrique, et d'un axe 12 formé d'une tige axiale 121 munie à ses extrémités de deux cylindres formant une première tape ou bouchon, dit bouchon supérieur 122, et une seconde tape ou bouchon, dit bouchon inférieur123. Les bouchons sont aptes à coulisser de manière étanche dans la chemise, pour former une chambre de prélèvement étanche 13 entre la paroi tubulaire de la chemise et les deux bouchons dans la position fermée de l'enceinte illustrée aux figures 3 et 5. Chaque bouchon présente une gorge annulaire dans laquelle est monté un joint torique 124, 125 pour assurer l'étanchéité entre les bouchons et la chemise dans la position fermée de l'enceinte. L'axe est avantageusement monobloc.

Le bouchon supérieur 122 présente un taraudage axial 126 pour son assemblage à l'extrémité filetée d'une tige creuse de liaison montée fixe par rapport au cylindre du vérin, tel que décrit ci-après. La chemise comprend à une première extrémité, dite supérieure 111, deux oreilles longitudinales diamétralement opposées 112, chacune munie d'un perçage pour son assemblage à la tige de piston du vérin. Le bouchon supérieur comprend en outre une gorge annulaire 127 destinée à recevoir l'extrémité d'une vis 14 vissée dans un taraudage transversal de la chemise pour verrouiller l'enceinte en position fermée. Dans cette position fermée, le bouchon inférieur 123 est partiellement engagé dans la chemise, de manière à maintenir apparente une portion extérieure équipée d'un joint torique 128 qui sera utilisé pour la récupération de l'échantillon tel que décrit ci-après.

Un cône 3 est monté sur la deuxième extrémité de la chemise, dite inférieure 113, pour piéger des gaz. Un joint torique 114, monté dans une gorge annulaire de la chemise, assure l'étanchéité entre la chemise et le cône.

En référence à la figure 5, le vérin 2 comprend un cylindre 21 dans lequel est monté coulissant un piston 22 équipé d'une tige 23. Le cylindre est formé d'un tube creux muni d'une collerette supérieure 211 et d'une collerette inférieure 212. Le cylindre est fermé de manière étanche par un bouchon supérieur 24 fixé à sa collerette supérieure au moyen d'écrous et de vis, et par une bague inférieure 25 à collerette, emmanchée dans le cylindre et assemblée par sa collerette 251 à la collerette inférieure 212 du cylindre, la tige du piston étant apte à coulisser de manière étanche à travers ladite bague. La bague 25 est équipée d'un joint torique 252 pour assurer l'étanchéité entre le cylindre et ladite bague.

Une tige creuse de liaison 26 est assemblée axialement à l'extrémité inférieure du cylindre. Pour ce montage, la tige creuse présente une collerette supérieure 261 fixée à la collerette inférieure 212 du cylindre, au moyen de vis et d'écrous, en intercalant entre les deux la collerette 251 de la bague. La tige de liaison présente une extrémité libre filetée 262 pour son assemblage au bouchon supérieur 122 de l'enceinte.

L'extrémité libre 231 de la tige du piston est disposée axialement dans la tige creuse de liaison et est munie d'un perçage transversal débouchant permettant sa jonction aux oreilles 112 de la chemise au moyen d'une goupille 27 passant par des ouvertures longitudinales diamétralement opposées de la tige creuse, tel qu'illustré sur les figures 2 et 3.

Le bouchon supérieur 24 du vérin comprend un circuit d'admission 28 reliant le milieu extérieur à l'intérieur du cylindre. Le circuit d'admission est formé d'un canal vertical 281 débouchant dans le cylindre et équipé en sortie d'un ajutage, ledit canal vertical se prolongeant par un canal horizontal 282 débouchant sur un logement cylindrique vertical 283. Le logement vertical présente un épaulement, sa partie supérieure de plus faible section débouche sur la surface supérieure du bouchon, et sa partie inférieure de plus grande section est reliée par un canal secondaire 284 à l'extérieur. La fermeture et l'ouverture du circuit sont assurées par un pion mobile 285 logé dans l'alésage et actionnable de l'extérieur. Le pion présente un épaulement et est équipé de deux joints toriques 286, 287. Le pion est sollicité élastiquement, par un ressort 286 monté entre le fond de l'alésage et le pion, dans une position de fermeture dans laquelle le pion est en butée par son épaulement contre l'épaulement du logement. Le canal horizontal débouche entre les deux joints toriques. Une simple pression sur la partie extérieure du pion, à l'encontre du ressort, permet de déplacer le pion vers le bas dans une position d'ouverture du circuit, dans laquelle ce dernier est en communication avec l'extérieur. Le bouchon est formé de deux parties assemblées l'une à l'autre pour permettre le montage du pion.

Le bouchon supérieur est en outre équipé d'une soupape de décharge 289, reliant l'extérieur au canal vertical, au niveau de son raccordement au canal horizontal, pour permettre un passage de fluide vers l'extérieur lorsque la pression à l'intérieur du cylindre est supérieure à celle du milieu extérieur. Le piston comprend également une soupape de décharge 221 autorisant un passage de fluide de la partie inférieure du cylindre vers la partie supérieure lorsque la pression du fluide en dessous du piston dépasse celle du fluide au dessus du piston.

Le piston 22 est apte à coulisser depuis une position haute activée illustrée à la figure 4 vers une position basse désactivée illustrée aux figures 3 et 5.

Dans la position activée, le piston est disposé à proximité du bouchon supérieur 24 du cylindre, éventuellement contre ce dernier. Le cylindre constitue une chambre basse pression, sensiblement remplie d'air à pression atmosphérique. L'extrémité libre 231 de la tige du piston est disposée dans la tige de liaison 26, au-delà de la collerette 261 de cette dernière et peut être assemblée aux oreilles de la chemise par une goupille passant par les fentes longitudinales 263. La chemise recouvre alors la tige creuse, et le bouchon supérieur 122 de l'axe assemblé à la tige creuse est alors engagé dans la chemise, son bord inférieur 122a sensiblement au niveau de l'extrémité inférieure 113 de la chemise, le bord inférieur 31 du cône étant au niveau du bouchon inférieur 123.

Dans la position basse désactivée, le piston est à proximité de la bague d'étanchéité, en appui sur la bague de butée 29 intercalée entre le piston et la bague à collerette 25. L'extrémité libre 231 de la tige de piston est à proximité de l'extrémité filetée 262 de la tige creuse. La chemise reliée à la tige recouvre les deux bouchons de l'axe, l'enceinte est en position fermée.

Le dispositif comprend en outre une armature 4, solidaire du cylindre 21, s'étendant vers le bas autour de l'enceinte pour protéger cette dernière, et au-delà de l'enceinte de sorte que le dispositif puisse être posé sensiblement verticalement sur le fond. L'armature comprend quatre montants 41 montés sur le cylindre du vérin au moyen de deux demi-brides 42a, 42b assemblées l'une à l'autre autour du cylindre au moyen de vis et d'écrous, par exemple au niveau de la jonction entre le cylindre et la tige creuse de liaison, la collerette 251 assurant le blocage en translation de l'armature sur le cylindre. Les quatre montants présentent une partie intermédiaire cintrée vers l'extérieur et sont reliés à leur extrémité à un anneau 43 disposé au-delà du bord libre 31 du cône lorsque l'enceinte est connectée au vérin en position fermée. Une poignée de préhension 44 est portée par l'une des demi-brides pour permettre la préhension du dispositif de prélèvement par le bras d'un engin sous marin robotisé.

Une description du fonctionnement du dispositif pour la prise d'un échantillon sous marin va à présent être effectuée.

L'enceinte étant en position fermée, l'axe dans la chemise, l'axe est vissé sur l'extrémité filetée 262 de la tige creuse de liaison. Le piston est amené dans sa position inactive en exerçant une pression sur le pion escamotable et en tirant manuellement sur la tige de piston. La chemise 11 de l'enceinte est assemblée à l'extrémité libre 213 de la tige du piston via une goupille 27. Le piston est amené dans sa position active illustrée à la figure 4 où les traits interrompus entre les deux bouchons délimitent schématiquement le volume d'un échantillon (E) - en exerçant une pression sur le pion escamotable pour ouvrir le circuit d'admission et permettre l'évacuation du fluide présent au-dessus du piston. Le cylindre est rempli d'air à pression atmosphérique. L'enceinte est en position ouverte, l'axe et son bouchon inférieur étant apparents.

Le dispositif de prélèvement peut alors être immergé pour effectuer une prise d'échantillon. Le dispositif peut être descendu sur le site de prélèvement au moyen d'un engin sous marin équipé d'une pince apte à saisir la poignée et d'un moyen d'actionnement, par exemple de type vérin, capable de déplacer le pion. Le cône transparent permet de piéger, sous contrôle visuel via un système de caméra du robot, un fluide plus léger que l'eau, tel qu'un hydrocarbure ou un gaz. Le prélèvement est déclenché en exerçant une pression sur le pion afin d'ouvrir le circuit d'admission, via ledit moyen d'actionnement disposé en vis-à-vis du pion lorsque la pince du robot maintient la poignée. L'eau à une pression hydrostatique supérieure à la pression de l'air présent sous le piston du vérin, rentre dans le cylindre et déplace le piston vers sa position basse inactive, l'air étant comprimé dans l'espace défini par la bague de butée 29. Lors de ce déplacement, la chemise reliée à la tige du piston descend, sa goupille 27 se déplaçant dans les fentes longitudinales 263 de la tige creuse, et vient recouvrir l'axe et son bouchon inférieur 123, piégeant ainsi l'échantillon 13 dans la chemise, entre les deux bouchons.

Une fois l'échantillon prélevé, le pion est relâché et rappelé dans sa position de fermeture, et le dispositif de prélèvement peut être ramené en surface. Lors de la remontée, la soupape 221 du bouchon supérieur 24 et la soupape 289 du piston permettent de ramener la pression dans le vérin à une valeur résiduelle liée au réglage des ressorts desdites soupapes.

L'enceinte et le vérin sont dimensionnés en fonction d'une gamme de pressions hydrostatiques d'utilisation. La section du piston du vérin, ainsi que le circuit d'admission avec son ajutage, sont en particulier définis en fonction des pressions hydrostatiques d'utilisation pour réaliser les prélèvements à des vitesses et forces définies. A titre d'exemple, l'enceinte et le vérin sont dimensionnés pour fonctionner à une profondeur minimale de 200 mètres, et jusqu'à une profondeur maximale de 3000 mètres, soit de 20 à 308 bars, la course du piston de sa position activée à sa position désactivée s'effectuant en 1 à 10 secondes, cette durée variant peu avec la pression.

Dès récupération du dispositif en surface, l'enceinte de prélèvement est verrouillée en position fermée par la mise en place d'une vis 14, pour éviter tout déplacement relatif accidentel en translation de l'axe par rapport à la chemise lors du démontage de l'enceinte du vérin et de sa manipulation ultérieure jusqu'à son ouverture. Le démontage de l'enceinte du vérin s'effectue en retirant la goupille 27 pour désassembler la chemise et la tige de vérin, et en dévissant le bouchon supérieur 122 de la tige creuse de liaison 26. Le vérin peut être utilisé pour un autre prélèvement après avoir ramené son piston en position active, par simple pression sur le pion et poussée sur l'axe tout maintenant la chemise, pour chasser l'eau du cylindre.

Une description du banc de laboratoire pour l'ouverture de l'enceinte et la récupération de l'échantillon sous pression va à présent être effectuée en référence aux figures 6 à 9.

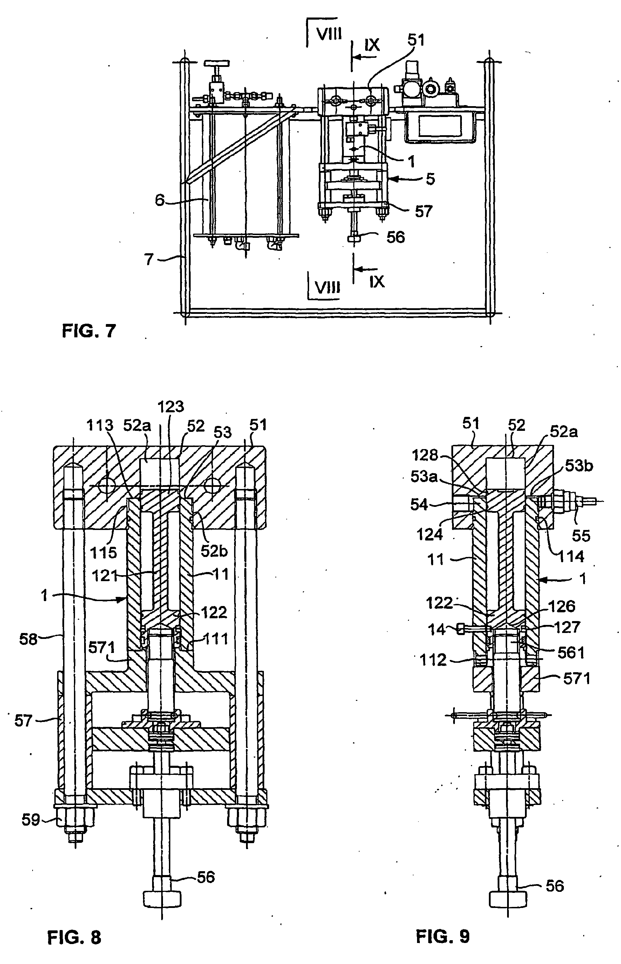

Le banc de laboratoire comprend un système ou caisson d'ouverture 5 monté sur un châssis 7. En référence aux figures 8 et 9, le caisson comprend un bloc 51 muni d'un logement cylindrique de réception 52 présentant un épaulement 53. Cet épaulement définit une première partie de logement, dite inférieure 52a, dont le diamètre est ajusté à celui des bouchons de l'enceinte, et une deuxième partie, dite supérieure 52b, dont le diamètre est ajusté au diamètre extérieur de la chemise. Le bloc comprend un canal radial de récupération 54, débouchant sur la paroi cylindrique de la partie supérieure du logement, dans lequel est montée une vanne (non représentée) de raccordement à un circuit de récupération d'échantillon. L'épaulement présente une première rainure radiale 53a qui s'étend sur toute la largeur de l'épaulement et qui débouche sur ce canal radial de récupération. L'épaulement présente une deuxième rainure radiale 53b, diamétralement opposée à la première rainure, débouchant sur un logement dans lequel est monté un capteur de pression 55.

Le caisson comprend en outre une vis de poussée 56 comprenant une extrémité 561 apte à se visser dans le taraudage 126 du bouchon supérieur de l'enceinte. La vis de poussée est montée sur un support 57 comprenant une traverse 571 apte à venir en butée contre l'extrémité supérieure 111 de la chemise, ledit support pouvant être fixé au moyen de la tige de montage 58 sur le bloc, de sorte que la vis de poussée soit disposée dans l'axe du logement.

Pour son ouverture, l'enceinte est emmanchée dans le logement 52, après retrait de son cône 3, la chemise en butée par son extrémité inférieure 113 contre l'épaulement 53 du logement, et son bouchon inférieur 123 partiellement emmanché dans la partie inférieure 52a du logement. Le deuxième joint 128 du bouchon inférieur assure l'étanchéité entre le bouchon inférieur et la partie inférieure 52a du logement, le joint torique 114 de la chemise assure l'étanchéité entre la partie supérieure 51b du logement et la chemise. La traverse 571 du support est montée contre l'extrémité supérieure 111 de la chemise, et le support est fixé solidement sur le bloc par serrage des boulons 59 des tiges de montage 58, de manière à serrer la chemise entre l'épaulement et la traverse. La vis de poussée 56 est vissée sur le bouchon. Après retrait de la vis de verrouillage 14 de l'enceinte, la vis de poussée 56 est vissée davantage pour pousser l'axe de l'enceinte, comprimant l'air contenu entre le bouchon et le fond du logement dans la partie inférieure du logement, jusqu'à amener le premier joint torique 124 du bouchon inférieur au-delà des rainures 53a et 53b, et mettre ainsi ces dernières en communication avec l'intérieur de l'enceinte. Comme visible à la figure 8, la paroi de la chemise présente au niveau de son extrémité inférieure une réduction 115 de son diamètre extérieur permettant la mise en communication du capteur de pression avec l'intérieur de l'enceinte. Le circuit de récupération, préalablement mis sous vide primaire pour en assurer la propreté, est ouvert par ouverture de la vanne précitée montée dans le conduit.

Le banc de laboratoire peut comprendre un caisson de détente 6, connu en soi, monté sur le châssis 7 et relié au circuit de récupération pour effectuer une détente de l'échantillon lorsque la pression de l'échantillon mesurée préalablement par le capteur de pression, est incompatible avec la pression admissible des appareils de mesures.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention. Selon une variante de réalisation, la tige du piston est reliée à l'axe de l'enceinte et la chemise est reliée au cylindre, la fermeture de l'enceinte étant alors obtenue par un déplacement vers le haut du piston du vérin, par mise en communication de l'intérieur du cylindre par un pion disposé en partie inférieure du cylindre. Le dispositif selon l'invention peut être utilisé pour le prélèvement de tout type d'échantillon sous pression, notamment des sédiments et/ou roches, par exemple placés sur le bouchon inférieur d'une enceinte appropriée en position ouverte, ou encore d'animaux.

## Revendications

1. Dispositif de prélèvement d'échantillons sous pression, en particulier en milieu sous-marin, **caractérisé en ce qu'**il comporte
- une enceinte de prélèvement (1) formée d'une chemise tubulaire (11) et d'un axe (121) munie à ses extrémités de bouchons cylindriques (122, 123), apte à coulisser axialement dans ladite chemise de manière former une chambre de prélèvement étanche (13) entre la paroi tubulaire de la chemise et les deux bouchons dans une position fermée de l'enceinte de prélèvement, et
- un système de déplacement apte à réaliser une translation relative de l'axe de l'enceinte par rapport à ladite chemise pour amener l'enceinte en position fermée, ledit système comprenant un vérin (2) comportant un cylindre (21) équipé à une première extrémité de moyens de mise en communication (28, 285) de l'intérieur du cylindre avec le milieu extérieur afin de déplacer le piston (22) du.vérin d'une position activée dans laquelle ledit piston est disposé du côté de ladite première extrémité, le cylindre étant rempli d'un fluide compressible basse pression, vers une position désactivée dans laquelle le piston est disposé du côté de la deuxième extrémité du cylindre, le cylindre étant au moins partiellement rempli de fluide extérieur à pression hydrostatique,
l'un des éléments de l'enceinte de prélèvement parmi la chemise (11) et l'axe (121) étant apte à être assemblé par des moyens de liaison (26) au cylindre du vérin, l'autre élément étant apte à être assemblé à l'extrémité libre (231) de la tige (23) du piston de sorte que, dans la position activée du piston au moins l'un des bouchons de l'axe n'est pas engagé dans la chemise, et que dans la position désactivée du piston, l'enceinte de prélèvement est en position fermée.

2. Dispositif selon la revendication 1, **caractérisé en ce que** lesdits moyens de mise en communication comprennent un pion escamotable (285), monté sur le cylindre (21) et sollicité par des moyens de rappel élastiques (288) dans une position de fermeture d'un circuit d'admission (28) reliant l'intérieur du cylindre au milieu extérieur, ledit pion étant déplaçable sous l'effet d'une pression extérieure exercée sur ledit pion à l'encontre des moyens de rappel, dans une position d'ouverture dudit circuit d'admission.

3. Dispositif selon la revendication 1 ou 2, **caractérisé en ce que** la tige (23) de piston (22) est apte à coulisser de manière étanche dans la deuxième extrémité du cylindre opposée à la première extrémité du cylindre qui porte lesdits moyens de mise en communication (28, 285), l'extrémité libre (231) de la tige de piston étant apte à être assemblée à une première extrémité (111) de la chemise, l'axe (121) étant apte à être assemblée par un premier bouchon (122) au cylindre par lesdits moyens de liaison (26).

4. Dispositif selon l'une des revendications 1 à 3, **caractérisé en ce que** la chemise (11) comprend à une première extrémité (111) deux oreilles longitudinales (112) pour son assemblage au vérin, l'axe (121) comprenant un premier bouchon (122) muni d'un taraudage axial (126) pour son assemblage au vérin.

5. Dispositif selon la revendication 3 et 4, **caractérisé en ce que** lesdits moyens de liaison comprennent une tige de liaison creuse (26) assemblée à la deuxième extrémité du cylindre, dans laquelle coulisse la tige (23) de piston (22), l'axe (121) étant assemblée par son premier bouchon (122) à l'extrémité libre filetée (262) de la tige de liaison, la chemise (11) étant assemblée par ses oreilles longitudinales (112) à l'extrémité libre (213) de la tige de piston au moyen d'une goupille (27) apte à coulisser dans deux fentes longitudinales (263) de la tige creuse lors du déplacement de la tige de piston.

6. Dispositif selon l'une des revendications 1 à 5, **caractérisé en ce que** le cylindre (21) et le piston (22) du vérin sont chacun équipés d'une soupape de décharge (289, 221) autorisant un passage de fluide de l'intérieur du cylindre vers l'extérieur lorsque la pression dans le cylindre est supérieure de celle du milieu extérieur.

7. Dispositif selon l'une des revendications 1 à 6, **caractérisé en ce qu'**il comprend un cône (3) apte à être assemblé de manière amovible sur la chemise (11) de l'enceinte de prélèvement.

8. Dispositif selon l'une des revendications 1 à 7, **caractérisé en ce que** l'enceinte de prélèvement (1) comprend des moyens de verrouillage (14, 127) de l'enceinte en position fermée, lesdits moyens de verrouillage comprenant par exemple une vis apte à être vissée dans un taraudage de la chemise et à s'engager dans une gorge annulaire du premier bouchon de l'axe.

9. Système d'ouverture de l'enceinte de prélèvement d'un dispositif de prélèvement selon l'une des revendications 1 à 8, pour la récupération d'un échantillon sous pression contenu dans ladite enceinte, **caractérisé en ce qu'**il comprend
- un bloc (51) muni d'un logement cylindrique de réception (52), présentant un épaulement (53), et d'un canal de récupération (54) débouchant dans ledit logement, et
- un support (57) apte à être monté fixe au-dessus du logement de manière à bloquer l'enceinte de prélèvement dans le logement, la chemise (11) en butée par ses extrémités (111, 113) entre l'épaulement (53) du logement et le support, ledit support portant une vis de poussée (56) apte à coopérer avec l'axe (121) pour la déplacer dans la partie inférieure (52a) du logement définie entre le fond du logement et son épaulement, afin d'ouvrir l'enceinte et récupérer l'échantillon par le canal de récupération.

10. Système d'ouverture selon la revendication 9, **caractérisé en ce que** l'épaulement (53) du logement présente une première rainure radiale (53a) débouchant sur le canal de récupération (54), des moyens d'étanchéité (128) étant prévus pour garantir l'étanchéité entre le bouchon (123) placé dans le logement (52) et la paroi de la partie inférieure (52a) du logement

## Claims

1. Device for taking pressurized samples, particularly in a sub-sea environment, **characterized in that** it comprises:
- a sample-taking enclosure (1), formed of a tubular sleeve (11) and of a spindle (121), fitted at its ends with cylindrical plugs (122, 123), capable of sliding axially in said sleeve so as to form a sealed sample-taking chamber (13) between the tubular wall of the sleeve and the two plugs when the sample-taking enclosure is in a closed position, and
- a movement system capable of causing a relative translational movement of the spindle of the enclosure with respect to the said sleeve so as to bring the enclosure into a closed position, the said system comprising an actuator (2) comprising a cylinder (21) equipped at a first end with means (28, 285) of placing the inside of the cylinder in communication with the external environment so as to move the piston (22) of the actuator from an activated position in which the said piston is at the said first end, the cylinder being filled with a low-pressure compressible fluid, into a deactivated position in which the piston is arranged at the second end of the cylinder, the cylinder being at least partially filled with external fluid at hydrostatic pressure,
one of the elements of the sample-taking enclosure, either the sleeve (11) or the spindle (121), being able to be assembled by connecting means (26) with the cylinder of the actuator, the other element being able to be assembled with the free end (231) of the piston rod (23) so that, when the piston is in the activated position, at least one of the plugs of the spindle is not engaged in the sleeve and so that when the piston is in the deactivated position, the sample-taking enclosure is in the closed position.

2. Device according to Claim 1, **characterized in that** the said means of establishing communication comprise a retractable peg (285), mounted on the cylinder (21) and urged by elastic return means (288) into a position in which it closes an intake circuit (28) connecting the inside of the cylinder to the external environment, the said pin being movable under the effect of an external pressure applied to the said pin against the action of the return means, in a position in which the said intake circuit is open.

3. Device according to Claim 1 or 2, **characterized in that** the piston (22) rod (23) is able to slide in a fluidtight manner in the second end of the cylinder which is the opposite end to the first end of the cylinder that carries the said means (28, 285) of establishing communication, the free end (231) of the piston rod being able to be assembled with a first end (111) of the sleeve, the spindle (121) being able to be assembled via a first plug (122) with the cylinder via the said connecting means (26).

4. Device according to one of Claims 1 to 3, **characterized in that** the sleeve (11) comprises, at a first end (111), two longitudinal lugs (112) for assembling it with the actuator, the spindle (121) comprising a first plug (122) that has an axial tapped thread (126) for assembling it with the actuator.

5. Device according to Claims 3 and 4, **characterized in that** the said connecting means comprise a hollow connecting rod (26) assembled with the second end of the cylinder, in which rod the piston (22) rod (23) slides, the spindle (121) being assembled via its first plug (122) with the threaded free end (262) of the connecting rod, the sleeve (11) being assembled via its longitudinal lugs (112) with the free end (213) of the piston rod by means of a pin (27) able to slide in two longitudinal slots (263) of the hollow rod as the piston rod moves.

6. Device according to one of Claims 1 to 5, **characterized in that** the cylinder (21) and the piston (22) of the actuator are each fitted with a relief valve (289, 221) that allows fluid to pass from inside the cylinder to the outside when the pressure in the cylinder is higher than that of the external environment.

7. Device according to one of Claims 1 to 6, **characterized in that** it comprises a cone (3) that can be assembled removably on the sleeve (11) of the sample-taking enclosure.

8. Device according to one of Claims 1 to 7, **characterized in that** the sample-taking enclosure (1) comprises locking means (14, 127) for locking the enclosure in the closed position, the said locking means comprising, for example, a screw that can be screwed into a tapped thread in the sleeve and enter an annular groove in the first plug of the spindle.

9. System for opening the sample-taking enclosure of a sample-taking device according to one of Claims 1 to 8 to recover a pressurized sample contained within the said enclosure, **characterized in that** it comprises:
- a unit (51) fitted with a cylindrical accommodating housing (52) having a shoulder (53), and with a recovery channel (54) opening into the said housing, and
- a mount (57) that can be fixedly mounted above the housing so as to immobilize the sample-taking enclosure in the housing, the sleeve (11) in abutment via its ends (111, 113) between the shoulder (53) of the housing and the mount, the said mount having a thrust screw (56) able to engage with the spindle (121) to move it in the lower part (52a) of the housing defined between the bottom of the housing and its shoulder, so as to open the enclosure and recover the sample via the recovery channel.

10. Opening system according to claim 9, **characterized in that** the shoulder (53) of the housing has a first radial groove (53a) opening onto the recovery channel (54), sealing means (128) being provided to guarantee sealing between the plug (123) positioned in the housing (52) and the wall of the lower part (52a) of the housing.

## Patentansprüche

1. Vorrichtung zur Entnahme unter Druck stehender Proben, insbesondere in Unterwasser-Umgebung, **dadurch gekennzeichnet, dass** sie aufweist:
- einen Entnahmebehälter (1), der aus einer rohrförmigen Buchse (11) und einer Achse (121) gebildet ist, die an ihren Enden mit zylindrischen Stopfen (122, 123) versehen und in der Buchse axial gleitbeweglich ist, so dass sie in Schließstellung des Entnahmebehälters eine dichte Entnahmekammer (13) zwischen der rohrförmigen Wand der Buchse und den beiden Stopfen bildet, und
- eine Verstelleinrichtung, die eine relative Verschiebung der Achse des Behälters bezüglich der Buchse ausführen kann, um den Behälter in Schließstellung zu bringen, wobei die Verstelleinrichtung einen Kraftzylinder (2) aufweist, der einen Zylinder (21) enthält, der an einem ersten Ende mit Kommunikationsmitteln (28, 285) zum Kommunizieren des Zylinderinnenraums mit der Außenumgebung versehen ist, um den Kolben (22) des Kraftzylinders von einer aktivierten Stellung, in welcher der Kolben auf der Seite des ersten Endes angeordnet ist und der Zylinder mit einem komprimierbaren Niederdruckmedium gefüllt ist, in eine deaktivierte Stellung zu verstellen, in welcher der Kolben auf der Seite des zweiten Endes des Zylinders angeordnet ist, wobei der Zylinder zumindest teilweise mit Außenmedium unter hydrostatischem Druck gefüllt ist,
- wobei eines der Teile des Entnahmebehälters, nämlich die Buchse (11) bzw. die Achse (121), über Verbindungsmittel (26) mit dem Zylinder des Kraftzylinders zusammengefügt werden kann, wobei das andere Teil mit dem freien Ende (231) der Kolbenstange (23) des Kolbens zusammengefügt werden kann, so dass in der aktivierten Stellung des Kolbens zumindest einer der Stopfen der Achse nicht in die Buchse eingreift, und dass in der deaktivierten Stellung des Kolbens der Entnahmebehälter in Schließstellung ist.

2. Vorrichtung nach Anspruch 1, **dadurch gekennzeichnet, dass** die Kommunikationsmittel einen einfahrbaren Zapfen (285) aufweisen, der am Zylinder (21) gelagert ist und über Federrückstellmittel (288) in eine Schließstellung eines Zulaufkreises (28) beaufschlagt wird, welcher den Innenraum des Zylinders mit der Außenumgebung verbindet, wobei der Zapfen unter der Wirkung eines auf den Zapfen ausgeübten Außendrucks entgegen der Rückstellmittel in eine Öffnungsstellung zum Öffnen des Zulaufkreises verstellbar ist.

3. Vorrichtung nach Anspruch 1 oder 2, **dadurch gekennzeichnet, dass** die Kolbenstange (23) des Kolbens (22) in dichter Weise im zweiten Ende des Zylinders gleiten kann, das dem ersten Ende des Zylinders entgegengesetzt ist, welches die Kommunikationsmittel (28, 285) trägt, wobei das freie Ende (231) der Kolbenstange mit einem ersten Ende (111) der Buchse zusammengefügt werden kann, wobei die Achse (121) über einen ersten Stopfen (122) mit dem Zylinder über die Verbindungsmittel (26) zusammengefügt werden kann.

4. Vorrichtung nach einem der Ansprüche 1 bis 3, **dadurch gekennzeichnet, dass** die Buchse (11) an einem ersten Ende (111) zwei Längslaschen (112) aufweist, um sie mit dem Kraftzylinder zusammenzufügen, wobei die Achse (121) einen ersten Stopfen (122) aufweist, der mit einem axial verlaufenden Innengewinde (126) versehen ist, um diesen mit dem Kraftzylinder zusammenzufügen.

5. Vorrichtung nach Anspruch 3 und 4, **dadurch gekennzeichnet, dass** die Verbindungsmittel einen hohl ausgeführten Verbindungsschaft (26) aufweisen, der mit dem zweiten Ende des Zylinders zusammengefügt ist, in welchem die Kolbenstange (23) des Kolbens (22) gleitet, wobei die Achse (121) mit ihrem ersten Stopfen (122) an das mit einem Außengewinde versehende freie Ende (262) des Verbindungsschaftes angefügt ist, wobei die Buchse (11) mit ihren Längslaschen (112) mit dem freien Ende (213) der Kolbenstange mittels eines Stiftes (27) zusammengefügt ist, der bei der Verlagerung der Kolbenstange in zwei Längsschlitzen (263) des hohl ausgeführten Schaftes gleitbeweglich ist.

6. Vorrichtung nach einem der Ansprüche 1 bis 5, **dadurch gekennzeichnet, dass** der Zylinder (21) und der Kolben (22) des Kraftzylinders jeweils mit einem Ablassventil (289, 221) versehen sind, die ein Strömen des Mediums von innerhalb des Zylinders nach außerhalb dann gestatten, wenn der Druck in dem Zylinder höher als derjenige der Außenumgebung ist.

7. Vorrichtung nach einem der Ansprüche 1 bis 6, **dadurch gekennzeichnet, dass** sie einen Konus (3) aufweist, der lösbar mit der Buchse (11) des Entnahmebehälters zusammengefügt werden kann.

8. Vorrichtung nach einem der Ansprüche 1 bis 7, **dadurch gekennzeichnet, dass** der Entnahmebehälter (1) Verriegelungsmittel (14, 127) zum Verriegeln des Behälters in Schließstellung aufweist, wobei die Verriegelungsmittel beispielsweise eine Schraube aufweisen, die in ein Innengewinde der Buchse eingeschraubt werden kann und in eine Ringnut des ersten Stopfens der Achse eingreifen kann.

9. Einrichtung zum Öffnen des Entnahmebehälters einer Entnahmevorrichtung nach einem der Ansprüche 1 bis 8 zur Entnahme einer unter Druck stehender Probe, die in diesem Behälter enthalten ist, **dadurch gekennzeichnet, dass** sie aufweist:
- einen Block (51), der mit einer zylindrischen Aufnahmeausnehmung (52) versehen ist, die eine Schulter (53) aufweist, sowie mit einem Entnahmekanal (54), der in die Ausnehmung mündet,
- einen Halter (57), der fest oberhalb der Ausnehmung angebracht werden kann, so dass er den Entnahmebehälter in der Ausnehmung sichert, wobei die Buchse (11) mit ihren Enden (111, 113) in Anschlag zwischen der Schulter (53) der Ausnehmung und dem Halter liegt, wobei der Halter eine Schubschraube (56) trägt, die mit der Achse (121) zusammenwirken kann, um sie in den unteren Abschnitt (52a) der Ausnehmung zu verlagern, der zwischen dem Grund der Ausnehmung und ihrer Schulter definiert ist, um den Behälter zu öffnen und die Probe über den Entnahmekanal herauszunehmen.

10. Öffnungseinrichtung nach Anspruch 9, **dadurch gekennzeichnet, dass** die Schulter (53) der Aufnahmeausnehmung eine erste radial verlaufende Rille (53a) aufweist, die in den Entnahmekanal (54) mündet, wobei Dichtmittel (128) vorgesehen sind, um die Dichtheit zwischen dem in die Ausnehmung (52) eingeführten Stopfen (123) und der Wand des unteren Abschnitts (52a) der Aufnahmeausnehmung zu gewährleisten.
